# EUROPEAN PATENT APPLICATION

(11) **EP 4 564 766 A1**
(43) Date of publication of application: **04.06.2025**
(21) Application number: 23858618.4
(22) Date of filing: 22.03.2023
(51) Int. Cl.: H04L 41/12

(54) **NETWORK LINK GENERATION METHOD, SERVER AND STORAGE MEDIUM**

(30) Priority: 30.08.2022 CN 202211048814
(71) Applicant: ZTE CORPORATION, Shenzhen, Guangdong 518057 (CN)
(72) Inventor: LI, Yongchao, Shenzhen, Guangdong 518057 (CN)
(74) Representative: Deambrogi, Edgardo
(86) International application number: PCT/CN2023/083185
(87) International publication number: WO 2024/045576

(57) **Abstract**

Embodiments of the present disclosure relate to the field of communications, and provide a network link generation method, a device and a storage medium. The method comprises: acquiring a first network element, and creating a network link containing the first network element to obtain an initial network link, the first network element being a network element of a new access network monitoring system; acquiring a scenario classification model; according to attribute information of each network element in the initial network link and the scenario classification model, determining a target scenario type and a target scenario level that match the initial network link; and according to the target scenario type and the target scenario level, acquiring a target monitoring configuration parameter matching the initial network link, and setting the target monitoring configuration parameter for the initial network link to obtain a target network link.

## Description

### Cross-Reference to Related Application

The present disclosure claims priority to Chinese Patent Application No. CN202211048814.3, filed on August 30, 2022 and entitled "Network Link Generation Method, Server and Storage Medium", which is incorporated herein by reference in its entirety.

### Technical Field

The present disclosure relates to the field of communications technologies, and in particular, to a network link generation method, a server and a storage medium.

### Background

In the communication industry, as time progresses and competition within the sub-sectors of communication increases, network structures are becoming more complex and dense, and the variety and models of network devices are also growing, with the network nodes responsible for their respective functions, collectively forming a vast communication network. Monitoring and maintaining such a network has become increasingly complex, as identifying problematic points or links within a network composed of nodes with different functions yet mutually interrelated can be time-consuming and labor-intensive. Therefore, it is now necessary to establish network links between various network nodes and monitor these network links to enhance the monitoring accuracy of communication network quality. Currently, network links are monitored based on monitoring configuration parameters configured by technical personnel, which is inefficient and prone to errors. Thus, how to establish network links and configure monitoring configuration parameters for respective network nodes in a communication network is an urgent problem that needs to be addressed.

### Summary

Embodiments of the present disclosure provide a network link generation method, a server and a storage medium.

According to a first aspect, the embodiments of the present disclosure provide a network link generation method, including: acquiring a first network element, and creating a network link containing the first network element to obtain an initial network link, wherein the first network element is a network element newly accessing a network monitoring system; acquiring a scenario classification model, wherein the scenario classification model is established according to attribute information of each network element in a historical network link and a scenario type and a scenario level corresponding to the attribute information, and the historical network link is a network link which has been created; determining, according to the attribute information of each network element in the initial network link and the scenario classification model, a target scenario type and a target scenario level matching the initial network link; and acquiring a target monitoring configuration parameter matching the initial network link according to the target scenario type and the target scenario level, and setting the target monitoring configuration parameter for the initial network link to obtain a target network link.

According to a second aspect, the embodiments of the present disclosure provide a server. The server includes a processor, a memory, a computer program stored on the memory and executable by the processor, and a data bus for implementing connection and communication between the processor and the memory, wherein the computer program, when executed by the processor, implements the network link generation method according to any one of the embodiments of the present disclosure.

According to a third aspect, the embodiments of the present disclosure provide a storage medium, used for computer readable storage, wherein the storage medium stores one or more programs, and the one or more programs are able to be executed by one or more processors, so as to implement the network link generation method according to any one of the embodiments of the present disclosure.

### Brief Description of the Drawings

Fig. 1 is a flowchart of a network link generation method according to some embodiments of the present disclosure;
Fig. 2 is a schematic diagram of a scenario of initial network link generation according to some embodiments of the present disclosure;
Fig. 3 is a flowchart of sub-operations of the network link generation method in Fig. 1;
Fig. 4 is a schematic diagram of a scenario where a network monitoring system establishes a network link according to some embodiments of the present disclosure; and
Fig. 5 is a schematic structural block diagram of a server according to some embodiments of the present disclosure.

### Detailed Description of the Embodiments

The technical solution in the embodiments of the present disclosure will be described clearly and completely as follows with reference to the accompanying drawings in the embodiments of the present disclosure. Apparently, the embodiments to be described are merely a part rather than all of the embodiments of the present disclosure. All other embodiments acquired by those having ordinary skill in the art based on the embodiments of the present disclosure without creative efforts shall belong to the scope of protection of the present disclosure.

The flowcharts shown in the figures are merely illustrative, do not necessarily include all of the content and operations/steps, nor do they necessarily have to be performed in the order described. For example, some operations/steps may be broken down, combined, or partially combined, and thus the order of actual execution may vary as desired.

It should be understood that the terminology used in the description of the present disclosure is for the purpose of describing particular embodiments only and is not intended to be limiting of the disclosure. As used in this description and the appended claims, the singular forms "a", "an", and "the" are intended to include the plural forms as well, unless the context clearly indicates otherwise.

The embodiments of the present disclosure provide a network link generation method, a server and a storage medium. The network link generation method may be applied to a server. The server may be a physical server and a cloud server. The physical server may include various types of servers such as a desktop server, a rack-mounted server, a cabinet server, and a blade server. For example, the server may be a cloud server. The cloud server acquires a first network element, and creates a network link containing the first network element to obtain an initial network link, wherein the first network element is a network element newly accessing a network monitoring system. The cloud server acquires a scenario classification model, wherein the scenario classification model is established according to attribute information of each network element in a historical network link and a scenario type and a scenario level corresponding to the attribute information, and the historical network link is a network link which has been created. According to attribute information of each network element in the initial network link and the scenario classification model, the cloud server determines a target scenario type and a target scenario level matching the initial network link. The cloud server acquires a target monitoring configuration parameter matching the initial network link according to the target scenario type and the target scenario level, and sets the target monitoring configuration parameter for the initial network link to obtain a target network link.

Some implementations of the present disclosure will be described in detail below with reference to the accompanying drawings. The following embodiments and features in the embodiments may be combined with each other if there is no conflict.

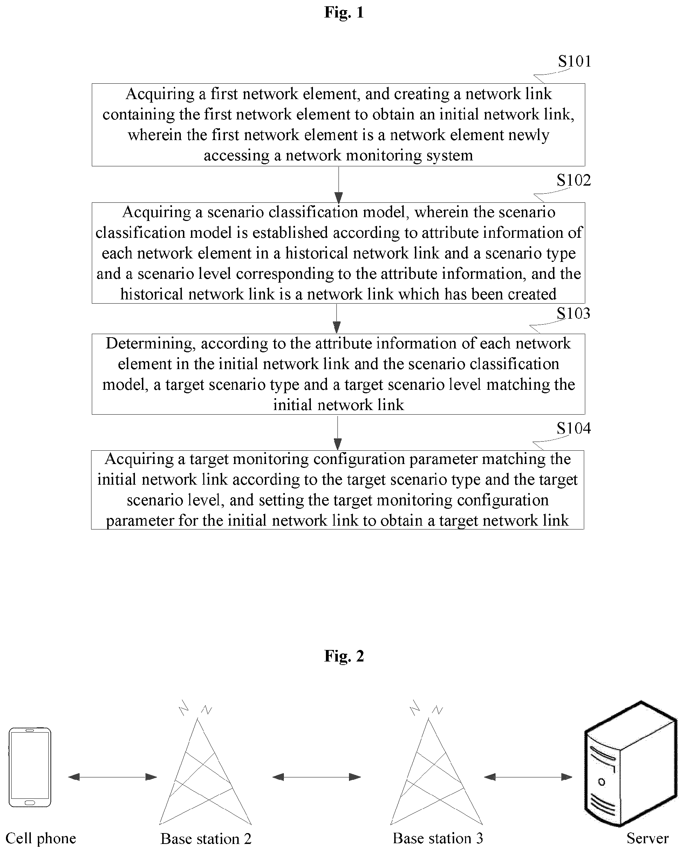

Please refer to Fig. 1. Fig. 1 is a flowchart of a network link generation method according to some embodiments of the present disclosure.

As shown in Fig. 1, the network link generation method includes operation S101 to operation S104.

In operation S101, a first network element is acquired, and a network link containing the first network element is created so as to obtain an initial network link, wherein the first network element is a network element newly accessing a network monitoring system.

The network monitoring system is a monitoring system arranged in a server. The network monitoring system is used for establishing a network link, monitoring network links that are established, and sending an alarm when abnormality of a network link is detected. The first network element is a network element newly accessing the network monitoring system, and may be determined according to a practical situation. The form of the first network element is not limited in the embodiments of the present disclosure. For example, the first network element may be a mobile device, a terminal device and a server. The mobile device may be a mobile phone, a notebook computer, a tablet computer, a wearable device, etc. The terminal device may be a device that accesses a core network, a bearer network, and a wireless network, for example, the terminal device may be a device such as a base station and a router. The server may be a physical server and a cloud server.

In some embodiments, a data flow direction relationship of the first network element is acquired, and whether a historical network link matching the first network element exists is determined according to the data flow direction relationship; and in a case of determining that the historical network link matching the first network element exists, the first network element is added to the historical network link matching the first network element to obtain the initial network link. The data flow direction relationship is used to describe data interaction between network elements. According to the data flow direction relationship of the first network element, it can be learned that the upstream network element and the downstream network element of the data flow of the first network element can be learned, so that it can be accurately determined whether a historical network link matching the first network element exists.

In some embodiments, whether a historical network link matching the first network element exists is determined according to the data flow direction relationship; in a case of determining that the historical network link matching the first network element does not exist, a data flow direction relationship between the first network element and a plurality of second network elements is acquired; and the initial network link among the first network element and the plurality of second network elements is created, according to the data flow direction relationship among respective network elements. The second network element at least includes one network element. By acquiring the data flow direction relationship between the first network element and the plurality of second network elements, a data streaming direction and sequence between the first network element and the plurality of second network elements can be accurately determined, and the network link among the first network element and the plurality of second network elements can be accurately acquired according to the data streaming direction and sequence.

Exemplarily, the first network element may be a mobile phone. When a historical network link matching the mobile phone cannot be found, network elements having data interaction with the mobile phone are acquired so as to obtain a plurality of second network elements. Exemplarily, the second network elements include a base station 1, a base station 2 and a server. The data flow direction relationship among the mobile phone, the base station 1, the base station 2 and the server is acquired, and a network link among the mobile phone, the base station 1, the base station 2 and the server is established according to the data flow direction relationship, so as to obtain an initial network link among the mobile phone, the base station 1, the base station 2 and the server as shown in Fig. 2.

In operation S102, a scenario classification model is acquired, wherein the scenario classification model is established according to attribute information of each network element in a historical network link and a scenario type and a scenario level corresponding to the attribute information, and the historical network link is a network link which has been created.

The scenario classification model may be set according to actual situations, which is not specifically limited in the embodiments of the present disclosure. For example, the scenario classification model may be a neural network model and a mapping relationship model. The scenario classification model may be established according to attribute information of each network element in a historical network link and a scenario type and a scenario level corresponding to the attribute information, and the historical network link is a network link which has been created.

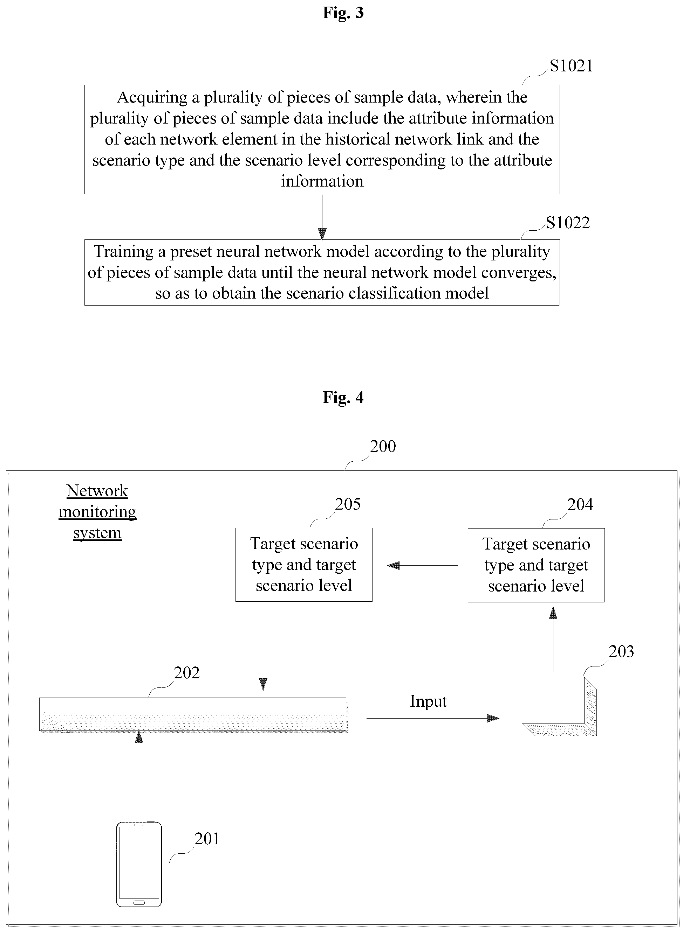

In some embodiments, as shown in Fig. 3, operation S102 includes sub-operations S1021 to S1022.

In sub-operation S1021, a plurality of pieces of sample data are acquired, wherein the plurality of pieces of sample data include the attribute information of each network element in the historical network link and the scenario type and the scenario level corresponding to the attribute information.

A plurality of historical network links may be acquired, and a plurality of sets of sample data including the plurality of historical network links may be acquired.

In some embodiments, the manner of generating the historical network link may be as follows: acquiring respective network elements on a historical network link, acquiring a data flow direction relationship between the respective network elements, performing according to the data flow direction relationship between the respective network elements, a link connection for the respective network elements so as to create an initial historical network link, acquiring attribute information of each network element in the initial historical network link, and querying a scenario type and a scenario level corresponding to each network element according to the attribute information of each network element. After acquiring the scenario type and the scenario level corresponding to each network element, a monitoring configuration parameter corresponding to the scenario type and the scenario level is acquired, and the monitoring configuration parameter is set for an initial historical network link so as to obtain a historical network link. By querying the scenario type and the scenario level corresponding to each network element, the monitoring configuration parameter can be accurately acquired according to the scenario type and the scenario level, and the monitoring configuration parameter is set for the initial historical network link to obtain the historical network link.

The attribute information of the network element may be set according to actual situations, and is not limited in the embodiments of the present disclosure. In a case where the network element is a mobile terminal, the attribute information includes information such as a terminal type and a terminal model of the mobile terminal. In a case where the network element is a server, the attribute information includes information such as a service type and a service identification number. In a case where the network element is a base station, the attribute information includes information such as a base station type and a base station model. The scenario type and the scenario level may be set according to actual situations, and are not limited in the embodiments of the present disclosure. For example, the scenario type includes a scenario type such as an operation control type and a data transmission type; and the scenario level includes a first level, a second level and a third level, wherein the requirement of network transmission increases with increase of the scenario level.

In some embodiments, when establishing the historical network link, the manner of querying, according to the attribute information of each network element, the scenario type and the scenario level corresponding to each network element may be as follows: those having ordinary skill in the art may allocate a scenario type and a scenario level matching each network element according to actual situations, which is not specifically limited in the embodiments of the present disclosure. For example, in a case where the network element is a mechanical arm, and the attribute information of the mechanical arm includes a mechanical arm type and a mechanical arm model, the scenario type allocated based on the mechanical arm type and the mechanical arm model is an operation control type, and the scenario level allocated based on the mechanical arm type and the mechanical arm model is level 3.

In some embodiments, when establishing the historical network link, the manner of acquiring the monitoring configuration parameter corresponding to the scenario type and the scenario level may be as follows: those having ordinary skill in the art allocate a monitoring configuration parameter corresponding to the scenario type and the scenario level according to actual situations. The monitoring configuration parameter may be selected according to actual situations, and is not specifically limited in the embodiments of the present disclosure. For example, the monitoring configuration parameter includes parameters such as a bandwidth size, a delay, an uplink rate, a downlink rate, an alarm threshold, etc. For example, in a case where the scenario type is an operation control type and the scenario level is level 3, the matching monitoring configuration parameter includes a low delay (an uplink delay of 20 ms and a downlink delay of 20 ms) and an alarm threshold of 99%. When establishing a historical network link, those having ordinary skill in the art are able to accurately determine the monitoring configuration parameter corresponding to the scenario type and the scenario level, thereby greatly improving the accuracy and efficiency of establishing a historical network link.

In sub-operation S1022, a preset neural network model is trained according to the plurality of pieces of sample data until the neural network model converges, so as to obtain the scenario classification model.

The type of the neural network model may be selected according to actual situations, which is not specifically limited in the embodiments of the present disclosure. For example, the neural network may be a convolutional neural network, a recurrent neural network or a recurrent convolutional neural network. The recurrent neural network includes a bidirectional long and short time memory network.

In some embodiments, the attribute information in the sample data is input into a neural network model for processing, so as to obtain a predicted scenario type and a predicted scenario level; a model loss value is calculated according to the predicted scenario type, the predicted scenario level and the scenario type and the scenario level corresponding to the attribute information, and whether the neural network model converges is determined according to the model loss value; in a case where the neural network model does not converge, a model parameter of the neural network model is adjusted so as to update the neural network model, and the updated neural network model continues to be trained until the neural network model converges. By inputting the attribute information into the neural network model for processing, the predicted scenario type and the predicted scenario level are acquired, and whether the neural network model converges is determined; and in the case where the neural network model does not converge, a model parameter of the neural network model is adjusted so as to update the neural network model, and the updated neural network model is continuously trained, so that a converged neural network model can be accurately acquired.

In some embodiments, a manner of calculating the model loss value according to the predicted scenario type, the predicted scenario level, and the scenario type and the scenario level corresponding to the attribute information may be as follows: calculating a similarity between the predicted scenario type and the predicted scenario level, and the scenario type and the scenario level corresponding to the attribute information so as to obtain the similarity between the predicted scenario type and the predicted scenario level and the scenario type and the scenario level, subtracting the similarity from a unit 1 to determine the model loss value based on a value obtained by subtracting the similarity from the unit 1. A manner of calculating the similarity between the predicted scenario type and the predicted scenario level, and the scenario type and the scenario level corresponding to the attribute information may be selected according to actual situations, and is not limited in the embodiments of the present disclosure. For example, a manner of calculating the similarity may be a cosine similarity degree calculation method. By calculating the similarity between the predicted scenario type and the predicted scenario level and the scenario type and the scenario level corresponding to the attribute information, the model loss value of the neural network model can be accurately acquired.

In some embodiments, a manner of determining whether the neural network model converges according to the model loss value may be as follows: determining whether the model loss value is greater than or equal to a preset threshold value; in a case where the model loss value is greater than or equal to the preset threshold value, determining that the neural network model does not converge; and in a case where the model loss value is less than the preset threshold value, determining that the neural network model converges. The preset threshold value may be set according to actual situations, which is not specifically limited in the embodiments of the present disclosure. For example, the preset threshold value may be set to 0.2. Whether the neural network model converges may be accurately known by determining whether the model loss value is greater than or equal to the preset threshold value.

In some embodiments, in a case where the scenario classification model is a scenario classification mapping model, a mapping relationship is established between the attribute information of each network element in each historical network link and a scenario type and a scenario level corresponding to the attribute information, so as to obtain the scenario classification mapping model between a plurality of historical network links and the scenario type and the scenario level. Based on the attribute information of each network element and the scenario type and the scenario level, the scenario classification mapping model can be established accurately, so as to subsequently match a target scenario type and a target scenario level with the initial network link more conveniently.

It should be noted that, the establishment of the mapping relationship between the attribute information of each network element in each historical network link and the scenario type and the scenario level corresponding to the attribute information may be implemented according to situations, which is not specifically limited in the embodiments of the present disclosure.

In operation S103, a target scenario type and a target scenario level matching the initial network link is determined according to the attribute information of each network element in the initial network link and the scenario classification model.

In some embodiments, in a case where the scenario classification model is a neural network model, the attribute information of each network element in the initial network link is input into the scenario classification model to obtain the target scenario type and the target scenario level matching the initial network link. By inputting the attribute information of each network element in the initial network link into the scenario classification model, the target scenario type and target scenario level matching the initial network link may be acquired accurately.

In some embodiments, in a case where the scenario classification model is a scenario classification mapping model, the attribute information of each network element in the initial network link is compared with each attribute information in the scenario classification mapping model to obtain each attribute information having a maximum similarity; a scenario type and a scenario level corresponding to the attribute information with the maximum similarity are acquired, and the acquired scenario type and scenario level are determined as the target scenario type and the target scenario level matching the initial network link. Through the scenario classification mapping model, the target scenario type and target scenario level that match the initial network link may be acquired accurately.

In operation S104, a target monitoring configuration parameter matching the initial network link is acquired according to the target scenario type and the target scenario level, and setting the target monitoring configuration parameter for the initial network link to obtain a target network link.

In some embodiments, a preset mapping relationship table between scenario types, scenario levels and monitoring configuration parameters is acquired; and the monitoring configuration parameter corresponding to the target scenario type and the target scenario level is queried from the preset mapping relationship table, and the found monitoring configuration parameter is determined as the target monitoring configuration parameter. The preset mapping relationship table is established in advance according to scenario types, scenario levels and monitoring configuration parameters, and the preset mapping relationship table may be established according to actual situations, which is not specifically limited in the embodiments of the present disclosure. The target monitoring configuration parameter matching the initial network link may be accurately acquired through the preset mapping relationship table.

In some embodiments, after the target monitoring configuration parameter matching the initial network link is acquired, the target monitoring configuration parameter is set for the initial network link to obtain the target network link. By setting the target monitoring configuration parameter for the initial network link, the network link including the first network element may be created accurately.

In some embodiments, after the target network link is acquired, network element information of each network element in the target network link is acquired; a network connection is established with each network element based on the network element information of each network element, and monitoring data transmitted by each network element is received. The network element information may be determined according to practical situations, which is not limited in the embodiments of the present disclosure. For example, in a case where the network element is a mobile terminal, the network element information includes information such as a serial number, an account name and a password of the mobile terminal; in a case where the network element is a network device such as a core network, a bearer network and a wireless network, the network element information includes information such as an account, a password, an IP address and a port number; in a case where the network element is a server, the network element information includes information such as a port number, an IP address, and a protocol number. The network element information of each network element in the target network link may be acquired so as to accurately establish a network connection with each network element, and monitoring data transmitted by each network element may be received.

In some embodiments, after monitoring data transmitted by each network element is acquired, the monitoring data transmitted by each network element is compared with the target monitoring configuration parameter, and in a case where the monitoring data does not conform to a preset range of the target monitoring configuration parameter, a preset alarm is sent so as to remind a user that a fault occurs in the target network link, thereby greatly improving the efficiency and accuracy of network link transmission.

Exemplarily, as shown in Fig. 4, a network monitoring system 200 acquires a first network element 201, and creates a network link containing the first network element 201 to obtain an initial network link 202, acquires a scenario classification model 203, and input attribute information of each network element in the initial network link 202 into the scenario classification model 203, acquires a target scenario type and a target scenario level 204 matching the initial network link, acquires a target monitoring configuration parameter 205 matching the initial network link, and sets the target monitoring configuration parameter for the initial network link to obtain a target network link (the target network link is the initial network link 202 after the target monitoring configuration parameter is set for the initial network link 202).

The network link generation method in the described embodiments includes: acquiring a first network element, and creating a network link containing the first network element to obtain an initial network link, acquiring a scenario classification model, determining, according to the attribute information of each network element in the initial network link and the scenario classification model, a target scenario type and a target scenario level matching the initial network link; and acquiring a target monitoring configuration parameter matching the initial network link according to the target scenario type and the target scenario level, and setting the target monitoring configuration parameter for the initial network link to obtain a target network link. In the present solution, an initial network link containing a first network element is first established, a scenario classification model is acquired, and a target scenario type and a target scenario level matching the initial network link may be accurately determined by means of the scenario classification model, a target monitoring configuration parameter matching the initial network link can be accurately acquired based on the target scenario type and the target scenario level, and the target monitoring configuration parameter is set for the initial network link, so that the target network link can be accurately acquired. The efficiency and accuracy of establishing a network link are greatly improved.

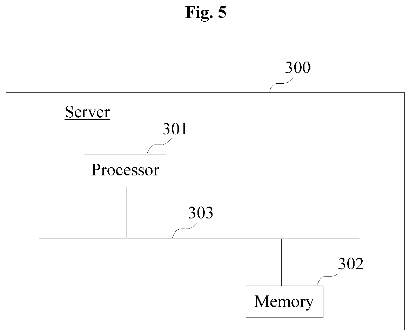

Please refer to Fig. 5. Fig. 5 is a schematic structural block diagram of a server according to some embodiments of the present disclosure.

As shown in Fig. 5, the server 300 includes a processor 301 and a memory 302, where the processor 301 and the memory 302 are connected by using a bus 303, and the bus is, for example, an Inter-integrated Circuit (I2C) bus.

The processor 301 is configured to provide computing and control capabilities and support running of the whole server. The processor 301 may be a Central Processing Unit (CPU), and may also be another general processor, a Digital Signal Processor (DSP), an Application Specific Integrated Circuit (ASIC), a Field-Programmable Gate Array (FPGA), or another programmable logic device, a discrete gate or transistor logic device, a discrete hardware component, or the like. The general processor may be a microprocessor, or the processor may also be any conventional processor.

The memory 302 may be a flash chip, a Read-Only Memory (ROM) disk, an optical disk, a Universal Serial Bus (USB) disk, a mobile hard disk, or the like.

Those having ordinary skill in the art may understand that the structure shown in Fig. 5 is only a block structure of the portion related to the solution of the present disclosure, and does not limit a server to which the solution of the present disclosure is applied. The server may include more or fewer components than what are shown in the figure, or combine some components, or have different component arrangements.

The processor runs a computer program stored in the memory, and implements any network link generation method provided in the embodiments of the present disclosure when executing the computer program.

In some embodiments, the processor 301 runs a computer program stored in a memory, and implements the following operations when executing the computer program: acquiring a first network element, and creating a network link containing the first network element to obtain an initial network link, wherein the first network element is a network element newly accessing a network monitoring system; acquiring a scenario classification model, wherein the scenario classification model is established according to attribute information of each network element in a historical network link and a scenario type and a scenario level corresponding to the attribute information, and the historical network link is a network link which has been created; determining, according to the attribute information of each network element in the initial network link and the scenario classification model, a target scenario type and a target scenario level matching the initial network link; and acquiring a target monitoring configuration parameter matching the initial network link according to the target scenario type and the target scenario level, and setting the target monitoring configuration parameter for the initial network link to obtain a target network link.

In some embodiments, when creating a network link containing the first network element to obtain an initial network link, the processor 301 implements operations including: acquiring a data flow direction relationship of the first network element, and determining, according to the data flow direction relationship, whether a historical network link matching the first network element exists; and in a case of determining that the historical network link matching the first network element exists, adding the first network element to the historical network link matching the first network element to obtain the initial network link.

In some embodiments, after determining, according to the data flow direction relationship, whether a historical network link matching the first network element exists, the processor 301 further implements operations including: acquiring a data flow direction relationship between the first network element and a plurality of second network elements; and creating, according to the data flow direction relationship among respective network elements, the initial network link among the first network element and the plurality of second network elements.

In some embodiments, when acquiring the scenario classification model, the processor 301 implements operations including: acquiring a plurality of pieces of sample data, wherein the plurality of pieces of sample data include the attribute information of each network element in the historical network link and the scenario type and the scenario level corresponding to the attribute information; and training a preset neural network model according to the plurality of pieces of sample data until the neural network model converges, so as to obtain the scenario classification model.

In some embodiments, when training the preset neural network model according to the plurality of pieces of sample data, the processor 301 implements operations including: inputting the attribute information in the plurality of pieces of sample data into the neural network model for processing, so as to obtain a predicted scenario type and a predicted scenario level; calculating a model loss value according to the predicted scenario type, the predicted scenario level and the scenario type and the scenario level corresponding to the attribute information, and determining whether the neural network model converges according to the model loss value; and in a case where the neural network model does not converge, adjusting a model parameter of the neural network model so as to update the neural network model, and continuing to train the updated neural network model until the neural network model converges.

In some embodiments, when determining, according to the attribute information of each network element in the initial network link and the scenario classification model, the target scenario type and the target scenario level matching the initial network link, the processor 301 implements operations including: inputting the attribute information of each network element in the initial network link into the scenario classification model to obtain the target scenario type and the target scenario level matching the initial network link.

In some embodiments, when acquiring the target monitoring configuration parameter matching the initial network link according to the target scenario type and the target scenario level, the processor 301 implements operations including: acquiring a preset mapping relationship table between scenario types, scenario levels and monitoring configuration parameters; and querying the monitoring configuration parameter corresponding to the target scenario type and the target scenario level from the preset mapping relationship table, and determining the found monitoring configuration parameter as the target monitoring configuration parameter.

In some embodiments, after setting the target monitoring configuration parameter for the initial network link to obtain the target network link, the processor 301 implements operations including: acquiring network element information of each network element in the target network link; and establishing a network connection with each network element based on the network element information of each network element, and receiving monitoring data transmitted by each network element.

It should be noted that, those having ordinary skill in the art may clearly understand that, for the purpose of convenient and brief description, for a working process of the foregoing server, reference may be made to a corresponding process in the foregoing embodiments for the network link generation method, and details are not repeatedly described herein.

The embodiments of the present disclosure further provide a storage medium, which is used for computer readable storage. The storage medium stores one or more programs. The one or more programs may be executed by one or more processors, so as to implement any network link generation method provided in the embodiments of the present disclosure.

The storage medium may be an internal storage unit of the server in the foregoing embodiments, for example, a hard disk or a memory of the server. The storage medium may also be an external storage device of the server, for example, a plug-in hard disk, a Smart Media Card (SMC), a Secure Digital (SD) card, and a flash memory card (Flash Card) that are equipped on the server.

Those having ordinary skill in the art can appreciate that the functional blocks/units in all or some of the operations of the methods, the systems, and the apparatuses disclosed above may be implemented as software, firmware, hardware, and any suitable combination thereof. In a hardware implementation, the division between functional modules/units referred to in the above description does not necessarily correspond to the division of physical components. For example, one physical component may have multiple functions, or one function or operation may be cooperatively performed by several physical components. Some or all of the physical components may be implemented as software executed by a processor, such as a central processor, digital signal processor, or microprocessor, or as hardware, or as an integrated circuit, such as an application specific integrated circuit. Such software may be distributed on computer-readable media, which may include computer storage media (or non-transitory media) and communication media (or transitory media). As is well known to those having ordinary skill in the art, the term computer storage media includes both volatile and nonvolatile, removable and non-removable media implemented in any method or technology for storage of information (such as computer readable instructions, data structures, program modules, or other data). Computer storage media includes, but is not limited to, RAM, ROM, EEPROM, flash memory or other memory technology, CD-ROM, Digital Versatile Discs (DVD) or other optical disk storage, magnetic cassettes, magnetic tape, magnetic disk storage or other magnetic storage devices, or any other medium which can be used to store the desired information and which can be accessed by a computer. In addition, communication media typically embodies computer readable instructions, data structures, program modules, or other data in a modulated data signal such as a carrier wave or other transport mechanism and may include any information delivery media as is known to those having ordinary skill in the art.

The embodiments of the present disclosure provide a network link generation method, a server and a storage medium. The solution of the present disclosure includes: acquiring a first network element, and creating a network link containing the first network element to obtain an initial network link, acquiring a scenario classification model, determining, according to the attribute information of each network element in the initial network link and the scenario classification model, a target scenario type and a target scenario level matching the initial network link; and acquiring a target monitoring configuration parameter matching the initial network link according to the target scenario type and the target scenario level, and setting the target monitoring configuration parameter for the initial network link to obtain a target network link. In the present solution, an initial network link containing a first network element is first established, a scenario classification model is acquired, and a target scenario type and a target scenario level matching the initial network link may be accurately determined by means of the scenario classification model, a target monitoring configuration parameter matching the initial network link can be accurately acquired based on the target scenario type and the target scenario level, and the target monitoring configuration parameter is set for the initial network link, so that the target network link can be accurately acquired. The efficiency and accuracy of establishing a network link are greatly improved.

It should be understood that the term "and/or" as used in this description and the appended claims refers to, and includes, any and all possible combinations of one or more of the items listed in association. It should be noted that, in this specification, the terms "include", "comprise", or any other variation thereof are intended to cover a non-exclusive inclusion, so that a process, a method, an article, or a system that includes a series of elements not only includes those elements, but also includes other elements that are not explicitly listed, or further includes inherent elements of the process, the method, the article, or the system. An element limited by "including a..." does not exclude that there are other same elements in the process, method, article, or system that includes the element, unless there are more limitations.

The serial numbers of the embodiments of the present disclosure are only for description, and do not represent the preference of the embodiments. The foregoing descriptions are merely specific implementations of the present disclosure, but are not intended to limit the scope of protection of the present disclosure. Any equivalent modification or replacement readily figured out by those having ordinary skill in the art within the technical scope disclosed in the present disclosure shall fall within the scope of protection of the present disclosure. Therefore, the scope of protection of the present disclosure shall be subject to the scope of protection of the claims.

## Claims

1. A network link generation method, comprising:
acquiring a first network element, and creating a network link containing the first network element to obtain an initial network link, wherein the first network element is a network element newly accessing a network monitoring system;
acquiring a scenario classification model, wherein the scenario classification model is established according to attribute information of each network element in a historical network link and a scenario type and a scenario level corresponding to the attribute information, and the historical network link is a network link which has been created;
determining, according to the attribute information of each network element in the initial network link and the scenario classification model, a target scenario type and a target scenario level matching the initial network link; and
acquiring a target monitoring configuration parameter matching the initial network link according to the target scenario type and the target scenario level, and setting the target monitoring configuration parameter for the initial network link to obtain a target network link.

2. The network link generation method according to claim 1, wherein the creating a network link containing the first network element to obtain an initial network link comprises:
acquiring a data flow direction relationship of the first network element, and determining, according to the data flow direction relationship, whether a historical network link matching the first network element exists; and
in a case of determining that the historical network link matching the first network element exists, adding the first network element to the historical network link matching the first network element to obtain the initial network link.

3. The network link generation method according to claim 2, wherein after the determining, according to the data flow direction relationship, whether a historical network link matching the first network element exists, the method further comprises:
acquiring a data flow direction relationship between the first network element and a plurality of second network elements; and
creating, according to the data flow direction relationship among respective network elements, the initial network link among the first network element and the plurality of second network elements.

4. The network link generation method according to claim 1, wherein the acquiring the scenario classification model comprises:
acquiring a plurality of pieces of sample data, wherein the plurality of pieces of sample data comprise the attribute information of each network element in the historical network link and the scenario type and the scenario level corresponding to the attribute information; and
training a preset neural network model according to the plurality of pieces of sample data until the neural network model converges, so as to obtain the scenario classification model.

5. The network link generation method according to claim 4, wherein the training the preset neural network model according to the plurality of pieces of sample data comprises:
inputting the attribute information in the plurality of pieces of sample data into the neural network model for processing, so as to obtain a predicted scenario type and a predicted scenario level;
calculating a model loss value according to the predicted scenario type, the predicted scenario level and the scenario type and the scenario level corresponding to the attribute information, and determining whether the neural network model converges according to the model loss value; and
in a case where the neural network model does not converge, adjusting a model parameter of the neural network model so as to update the neural network model, and continuing to train the updated neural network model until the neural network model converges.

6. The network link generation method according to claim 1, wherein the determining, according to the attribute information of each network element in the initial network link and the scenario classification model, the target scenario type and the target scenario level matching the initial network link comprises:
inputting the attribute information of each network element in the initial network link into the scenario classification model to obtain the target scenario type and the target scenario level matching the initial network link.

7. The network link generation method according to any one of claims 1-6, wherein the acquiring the target monitoring configuration parameter matching the initial network link according to the target scenario type and the target scenario level comprises:
acquiring a preset mapping relationship table between scenario types, scenario levels and monitoring configuration parameters; and
querying the monitoring configuration parameter corresponding to the target scenario type and the target scenario level from the preset mapping relationship table, and determining the found monitoring configuration parameter as the target monitoring configuration parameter.

8. The network link generation method according to any one of claims 1-6, wherein after the setting the target monitoring configuration parameter for the initial network link to obtain the target network link, the method further comprises:
acquiring network element information of each network element in the target network link; and
establishing a network connection with each network element based on the network element information of each network element, and receiving monitoring data transmitted by each network element.

9. A server, comprising a processor, a memory, a computer program stored on the memory and executable by the processor, and a data bus for implementing connection and communication between the processor and the memory, wherein the computer program, when executed by the processor, implements the network link generation method according to any one of claims 1 to 8.

10. A storage medium, used for computer readable storage, wherein the storage medium stores one or more programs, and the one or more programs are able to be executed by one or more processors, so as to implement the network link generation method according to any one of claims 1 to 8.
